# EUROPEAN PATENT APPLICATION

(11) **EP 4 704 284 A1**
(43) Date of publication of application: **04.03.2026**
(21) Application number: 24196995.5
(22) Date of filing: 28.08.2024
(51) Int. Cl.: H02J 3/00, C25B 1/04, C25B 15/02, H02J 3/14, H02J 4/00

(54) **AN ELECTROLYSIS SYSTEM, A METHOD FOR OPERATING AN ELECTROLYSIS SYSTEM, A COMPUTER PROGRAM, A COMPUTER-READABLE STORAGE MEDIUM, A CONTROLLER AND AN ELECTRICAL POWER SYSTEM**

(71) Applicant: Siemens Energy Global GmbH & Co. KG, 81739 München (DE)
(72) Inventor: Schumann, Sven, 91452 Wilhermsdorf (DE); Bendig, Marvin, 90513 Zirndorf (DE); Loku, Fisnik, 90439 Nürnberg (DE); Langenberg, Nils, 90461 Nürnberg (DE); Craciun, Bogdan, 91052 Erlangen (DE)

(57) **Abstract**

The present invention relates to an electrolysis system (1) comprising an electrolyzer power supply system (2) and an electrolyzer (3), wherein the electrolyzer power supply system (2) is adapted to receive an alternating current electrical power input (4) from an electrical network (5) and to convert the alternating current electrical power input (4) into a direct current electrical power input (5) for the electrolyzer (3), wherein the electrolyzer power supply system (2) is adapted to provide the direct current electrical power input (6) to the electrolyzer (3), which is adapted to produce an energy carrier by means of the direct current electrical power input (6). The electrolysis system (1) further comprises an electrical load (7) which is adapted to absorb the alternating current electrical power input (4) and/or the direct current electrical power input(6) at least partly.

## Description

### Technical Field

The present invention relates to an electrolysis system, a method for operating an electrolysis system, a computer program, a computer-readable storage medium, a controller and an electrical power system comprising said electrolysis system and/or said controller.

### Technological Background

Connecting large electrolysis systems to the public electrical network requires compliance with local network code requirements. Part of these requirements, especially for large electrolysis systems, is a fault ride through capability. The typical core requirement is to remain fully connected to the electrical network in the event of a temporary voltage dip or voltage spike in the electrical network. Longer or deeper voltage dips or spikes allow the electrolysis system to be disconnected. The network operator of an electrical network specifies a range for the voltage dip or spike during which the electrolysis system must remain connected to the electrical grid, whereas the electrolysis system may disconnect from the electrical network when the voltage dip or spike is outside the defined range. Meeting this requirement is a challenge for the electrolysis system and its converter systems.

Important for the grid operator is the availability of the electrolysis system as an electrical load after the fault has been removed, the so-called post-fault recovery behavior. If a large electrolysis system were to shut down in the event of a short-term disturbance in the electrical network, the network operator would struggle to balance the power input and power output after the fault has been cleared. Further, the electrolysis system cannot be adjusted quickly enough. Therefore, only a certain amount of the electrical load consuming electrical power from the electrical network is allowed to be disconnected from the electrical network and it is furthermore essential for network stability that large electrical loads remain connected in case of a voltage dip or spike and that they can be quickly ramped up after the fault event to the pre-fault level in order to keep the frequency of the electrical network stable. A major challenge is thus to balance the operation of the electrical network during the fault.

### Summary of the invention

It is thus an object of the present invention to provide an improved electrolysis system and an improved method for operating the electrolysis system that improves the network stability.

A solution is provided by the subject matter according to the independent claims. Advantageous additional embodiments of the invention are described by the dependent claims, the following description and the figures.

The invention relates to an electrolysis system comprising an electrolyzer power supply system and an electrolyzer, wherein the electrolyzer power supply system is adapted to receive an alternating current electrical power input from an electrical network and to convert the alternating current electrical power input into a direct current electrical power input for the electrolyzer, wherein the electrolyzer power supply system is adapted to provide the direct current electrical power input to the electrolyzer, which is adapted to produce an energy carrier by means of the direct current electrical power input.

According to the invention, the electrolysis system further comprises an electrical load which is adapted to absorb the alternating current electrical power input and/or the direct current electrical power input at least partly, particularly instead of the electrolyzer and/or for a duration of at least a fault event.

In other words, the electrical load may be electrically connected to the electrolyzer power supply system, particularly to a transformer and/or a converter and/or a busbar, and may be adapted to receive the alternating current electrical power input and/or the direct current electrical power input together with or instead of the electrolyzer. The busbar may be any electrical line that connects the electrolyzer power supply system with the electrical grid or with the electrolyzer or that electrically connects components of the electrolyzer power supply system, such as the transformer and/or the on-load tap changer and/or the converter. For example, the electrical load may be electrically connected to any current carrying component of the electrolysis system, particularly to one or more of an electrolyzer direct current bus, the converter, a transformer unit or between these devices, and a medium voltage or high voltage busbar of the electrolysis system. The duration of a fault event may be defined when the network parameter leaves a tolerance band around the reference network parameter and returns into the tolerance band.

The electrolyzer power supply system may be adapted to receive the alternating current electrical power input from an electrical network and to convert the alternating current electrical power input into the direct current electrical power input for the electrolyzer and additionally be adapted to provide the electrical power input to the electrolyzer. Here, the converter may be adapted to convert the alternating current electrical power input into the direct current electrical power input for the electrolyzer and optionally to drop and/or boost a direct voltage of the direct current electrical power input. The converter may be adapted to redirect the alternating current electrical power input and/or the direct current electrical power input between the electrolyzer and the electrical load.

The electrolyzer may be adapted to produce an energy carrier, such as hydrogen, using the electrical power input. The electrical network may be adapted to electrically connect a plurality of electrical power sources to a plurality of electrical loads such as the electrolysis system in a network operation mode. Alternatively, the electrical network may comprise an electrical connection between an electrical power source and the electrolysis system in an island operation mode. The network parameter may be a voltage.

Additionally or alternatively, the network parameter may be a network frequency and/or may be a frequency dependent network parameter. This allows to provide a frequency-related service, particularly by means of adjusting an active power absorption or consumption of the electrical load and/or of an auxiliary electrical load. The frequency-related service may comprise a limited frequency sensitivity mode (LFSM) for under-frequency (LFSM-U) and/or for over-frequency (LFSM-O), as well as a power-oscillation-damping (POD).

The electrolyzer power supply system, particularly the transformer and/or a load converter of the electrical load and/or the converter of the electrolyzer power supply system, may be adapted to redirect the alternating current electrical power input and/or the direct current electrical power input between the electrolyzer and the electrical load. The electrical load may be electrically connected to the electrolyzer power supply system by means of a switching element, wherein the switching element may be adapted to redirect the alternating current electrical power input and/or the direct current electrical power input between the electrolyzer and/or the electrical load.

Additionally or alternatively, the electrical load may be electrically connected to the electrolyzer power supply system by means of the load converter and/or by means of the converter of the electrolyzer power supply system which respectively may be adapted to adjust a load electrical power input between zero and the alternating current electrical power input and/or the direct current electrical power input of the electrolyzer.

The electrical load may be an electrical resistance or an energy storage unit that is adapted to store an electrical energy, wherein the electrical load may be different than the electrolyzer. The electrical load may be one or more of a power resistor, a heat generating device, a fan, a pump or other rotating device, a device performing a mechanical work (such as compression), a battery or an energy storage device, or a water bed. A water bed may comprise a cooling liquid which may be heated by means of a heating element. The electrical load may be adapted to be connected to or to be started up within a start duration of less than 10 or less than 100 milliseconds after the voltage drops below the allowed voltage band and to ramp up to the pre-fault power consumption of the electrolysis system within a ramp-up duration of 100 milliseconds or less. The electrical load may be adapted to operate at this power level for at least several seconds to a few minutes.

This provides the technical effect that the electrolysis system can continue to operate as an electrical load when the electrolyzer is not able to function as an electrical load when the network parameter is outside on operating range of the electrolyzer or when the electrolyzer has to disconnect due to the fault event. By this, the electrolysis system can contribute to a stability of the electrical network. This solution ensures the fulfillment and provision of grid services for any type of electrolysis system (PEM and alkaline) without applying dynamic increases in gas production, which is especially important for alkaline systems, solid oxide electrolysis, or high temperature electrolysis, but also beneficial for polymer electrolyte membrane electrolysis. This is beneficial for stack life, valves and other components of the electrolysis system. It also provides the opportunity to apply these functionalities to already installed equipment and reduces safety risks due to possible interactions or oscillations on the process side.

The electrolyzer power supply system also includes embodiments by which additional advantages are obtained.

In one embodiment, the electrolyzer power supply system is adapted to distribute the alternating current electrical power input and/or the direct current electrical power input between the electrolyzer and the electrical load. In other words, the electrolyzer power supply system, particularly the converter of the electrolyzer power supply system, is adapted to provide the alternating current electrical power input and/or the direct current electrical power input to the electrolyzer and/or to the electrical load. The electrolyzer power supply system may be adapted to divide the alternating current electrical power input and/or the direct current electrical power input between the electrolyzer and the electrical load, particularly in a ratio from zero to the alternating current electrical power input and/or the direct current electrical power input respectively for the electrolyzer and for the electrical load, particularly corresponding to a deviation of the network parameter of the electrical network from a reference network parameter. The network parameter may be a voltage and/or a frequency of the electrical network. This provides the advantage that the electrical load can support the stability of the electrical network, when the electrolyzer cannot be adjusted to a fluctuating network parameter anymore, for example because the network parameter fluctuates faster than a ramp-up and/or ramp-down rate of the electrolyzer.

In one embodiment, the electrical load is adapted to increase the absorption of the alternating current electrical power input and/or of the direct current electrical power input faster than a ramp-up rate of the electrolyzer and/or to decrease the absorption of the alternating current electrical power input and/or of the direct current electrical power input corresponding to the ramp-up rate of the electrolyzer or faster than a ramp-down rate of the electrolyzer. In other words, the electrical load has got a load ramp-up rate which is faster than the ramp-up rate of the electrolyzer. Particularly, the electrical load may be adapted to be ramped-up immediately, such as an electric resistor. This provides the advantage, that the electrical load may step in for the electrolyzer, when the network parameter is outside an operating range of the electrolyzer and/or the electrolyzer has to shut down due to the deviation of the network parameter from the reference network parameter being outside the operating range of the electrolyzer, or when more active power input shall be adjusted than the electrolyzer can provide.

Additionally or alternatively, the electrical load may be adapted to be ramped down slower or equal to the ramp-up rate of the electrolyzer. Thus, electrical load may be adapted to reduce the absorption of the alternating current electrical power input and/or of the direct current electrical power input corresponding to the ramp-up rate of the electrolyzer. This provides the advantage, that an unwanted shutdown of the electrolyzer during the ramp up can be avoided. Further, a pre-fault electrical load can be constantly provided to the electrical network during a ramp-up phase of the electrolyzer.

Additionally or alternatively, the electrical load may be adapted to be ramped down faster than a ramp-down rate of the electrolyzer. This provides the advantage of providing a frequency support.

In one embodiment, the electrolysis system further comprises a plurality of electrical loads, wherein the electrolyzer power supply system is adapted to adjust a power input and/or a number of electrical loads which are connected to or disconnected from the electrolyzer power supply system, particularly corresponding to the ramp-up rate of the electrolyzer. In other words, the electrolyzer power supply system may be adapted to increase the number of electrical loads, particularly to connect at least one of the electrical loads immediately to the electrolyzer power supply system or the electrolysis plant's power supply when the electrolyzer shuts down or is disconnected from the electrolyzer power supply system. The power input may be or correspond to the alternating current electrical power input and/or the direct current electrical power input. Additionally or alternatively, the electrolyzer power supply system may be adapted to increase the number of electrical loads corresponding to the deviation of the network parameter from a reference network parameter.

The electrolyzer power supply system may be adapted to decrease the number of electrical loads during a ramp-up of the electrolyzer, wherein a rate of change of a total electrical load may correspond to the ramp-up rate of the electrolyzer. The rate of change of the total electrical load may particularly be smaller than or equal to the ramp-up rate of the electrolyzer. The absorption of the alternating current electrical power input and/or of the direct current electrical power input of the respective electrical load may correspond to the rate of change of the total electrical load.

This provides the advantage that the electrical load can be easily adjusted to the deviation of the network parameter from the reference network parameter and/or to the ramp-up rate of the electrolyzer.

In one embodiment, the electrolysis system further comprises an auxiliary electrical load which is electrically connected to the electrolyzer power supply system and adapted to ramp up faster than the electrolyzer. In other words, the auxiliary electrical load may be adapted to immediately absorb the alternating current electrical power input and/or the direct current electrical power input for the electrolyzer. The auxiliary electrical load may be a resistor or a battery. The electrolyzer power supply system may be adapted to connect or disconnect the auxiliary electrical load. The auxiliary electrical load may be adapted to compensate a difference between the respective ramp up rates of the electrical load and the electrolyzer or any other power generation unit. This provides the advantage that an immediate shutdown of the electrolysis system can be compensated. The auxiliary electrical load may have the same or different features or characteristics as the electrical load, wherein the auxiliary electrical load and the electrical load may be adapted to be operated independently from each other. For example, the auxiliary electrical load may ramp-up and/or ramp-down faster than the electrical load and/or than the electrolyzer.

In one embodiment, the electrical load is adapted to absorb the alternating current electrical power input and/or the direct current electrical power input for at least a duration of the fault event, particularly at a constant power and/or current absorption rate. In other words, the electrical load may be adapted to consume the alternating current electrical power input and/or the direct current electrical power input during a fault event, particularly for at least the duration of the fault event and/or at a constant current and/or power consumption rate. The constant current rate may comprise keeping the current constant, particularly such that the power absorption rate may have a linear dependency on the voltage.

In one embodiment, wherein the electrical load is adapted to consume the alternating current electrical power input and/or the direct current electrical power input for at least the duration of the fault event and/or wherein the electrical load is adapted to consume a constant electric direct or alternating current, particularly during the fault event. The duration of the fault event may be from a moment when the network parameter leaves a tolerance band until the network parameter returns into the tolerance band.

The invention further relates to a method for operating an electrolysis system comprising an electrolyzer power supply system and an electrolyzer, wherein the electrolyzer power supply system receives an alternating current electrical power input from an electrical network and converts the alternating current electrical power input into a direct current electrical power input for the electrolyzer, wherein the electrolyzer power supply system provides the direct current electrical power input to the electrolyzer, which produces an energy carrier by means of the direct current electrical power input, further comprising an electrical load, comprising the step of:
- Absorbing the alternating current electrical power input and/or the direct current electrical power input by an electrical load at least partly, particularly instead of the electrolyzer and/or for at least a duration of a fault event.

In other words, the electrical load may receive the alternating current electrical power input and/or the direct current electrical power input from the electrical power system, particularly from a transformer and/or a converter thereof, together with or instead of the electrolyzer. The electrolyzer power supply system may provide the alternating current electrical power input and/or the direct current electrical power input to the electrical load and/or to the electrolyzer. For this, the electrolyzer power supply system, particularly the converter thereof, and/or a load converter of the electrical load may redirect or divide the alternating current electrical power input and/or the direct current electrical power input between the electrolyzer and the electrical load, particularly in a range from zero to the alternating current electrical power input and/or the direct current electrical power input respectively for the electrolyzer and the electrical load and optionally corresponding to a deviation of a network parameter of the electrical network from a reference network parameter of the electrical network. The network parameter may be a voltage and/or a frequency of the electrical network and the reference network parameter may be a reference voltage and/or a reference frequency of the electrical network.

This provides the technical effect that the electrolysis system can continue to operate as an electrical load when the electrolyzer is not able to function as an electrical load when the network parameter is outside on operating range of the electrolyzer. By this, the electrolysis system can contribute to a stability of the electrical network. This solution ensures the fulfillment and provision of grid services for any type of electrolysis system (PEM, alkaline, SOEC, AEM and others) without applying dynamic increases in gas production, which is especially important for alkaline systems, solid oxide electrolysis, or high temperature electrolysis. This is beneficial for stack life, valves and other components of the electrolysis system. It also provides the opportunity to apply these functionalities to already installed equipment and reduces safety risks due to possible interactions or oscillations on the process side.

In one embodiment, the method further comprises the step of: Distributing the alternating current electrical power input and/or the direct current electrical power input between the electrical load and the electrolyzer.

In other words, the alternating current electrical power input and/or the direct current electrical power input is provided to the electrolyzer and/or to the electrical load, wherein the alternating current electrical power input and/or the direct current electrical power input optionally is divided between the electrolyzer and the electrical load, particularly in a ratio from zero to the alternating current electrical power input and/or the direct current electrical power input respectively for the electrolyzer and for the electrical load.

Additionally, the alternating current electrical power input and/or the direct current electrical power input is provided to the electrolyzer and/or the electrical load or divided between the electrolyzer and the electrical load corresponding to the deviation of the network parameter of the electrical network from the reference network parameter.

This provides the advantage that the electrical load can support the stability of the electrical network, when the electrolyzer cannot be adjusted to a fluctuating network parameter anymore, for example because the network parameter fluctuates faster than a ramp-up and/or ramp-down rate of the electrolyzer.

In one embodiment, the method further comprises the steps of:
- Increasing the absorption of the alternating current electrical power input and/or of the direct current electrical power input by the electrical load faster than a ramp-up rate of the electrolyzer; and/or
- Decreasing the absorption of the alternating current electrical power input and/or of the direct current electrical power input by the electrical load corresponding to the ramp-up rate of the electrolyzer or faster than a ramp-down rate of the electrolyzer.

In other words, the alternating current electrical power input and/or the direct current electrical power input may be redirected to the electrical load at a rate that is faster than the ramp-up rate of the electrolyzer. Particularly, the alternating current electrical power input and/or the direct current electrical power input may be immediately redirected to the electrical load instead of the electrolyzer. This provides the advantage, that the electrical load may step in for the electrolyzer, when the network parameter is outside an operating range of the electrolyzer and/or the electrolyzer has to shut down due to the deviation of the network parameter from the reference network parameter being outside the operating range of the electrolyzer.

Additionally or alternatively, the electrical load may be ramped down slower or equal than the ramp-up rate of the electrolyzer. Thus, the absorption of the alternating current electrical power input and/or of the direct current electrical power input by the electrical load may be reduced corresponding to the ramp-up rate of the electrolyzer. This provides the advantage, that an unwanted shutdown or increased ageing of the electrolyzer during the ramp up can be avoided. Further, a pre-fault electrical load can be constantly provided to the electrical network during a ramp-up phase of the electrolyzer.

Additionally or alternatively, the electrical load may be ramped down faster than a ramp-down rate of the electrolyzer. This provides the advantage of providing a frequency support.

In one embodiment, the method further comprises the step of:
- Adjusting a power intake and/or a number of electrical loads which are connected to or disconnected from the electrolyzer power supply system, particularly corresponding to the ramp-up rate of the electrolyzer.

In other words, the number of electrical loads may be increased or their power absorption ramped-up, wherein the respective electrical load may particularly be connected immediately to the electrolyzer power supply system, when the electrolyzer shuts down or is disconnected from the electrolyzer power supply system.

Additionally or alternatively, the power intake and/or number of electrical loads is increased corresponding to the deviation of the network parameter from a reference network parameter. Additionally or alternatively, the power intake and/or number of electrical loads may be increased corresponding to the deviation of the network parameter from the reference network parameter.

The power intake and/or number of electrical loads may be reduced during a ramp-up of the electrolyzer, wherein a rate of change of a total electrical load may correspond to the ramp-up rate of the electrolyzer. The rate of change of the total electrical load may particularly be smaller than or equal to the ramp-up rate of the electrolyzer. The absorption of the alternating current electrical power input and/or of the direct current electrical power input of the respective electrical load may correspond to the rate of change of the total electrical load. This provides the advantage that the electrical load can be easily adjusted to the deviation of the network parameter from the reference network parameter and/or to the ramp-up rate of the electrolyzer.

In one embodiment, the method further comprises the step of:
- Adjusting a power consumption and/or connecting an auxiliary electrical load to the electrolyzer power supply system, or ramping the auxiliary electrical load up, wherein the auxiliary electrical load ramps up faster than the electrolyzer.

In other words, the auxiliary electrical load may be ramped-up, connected to or disconnected from the electrolyzer power supply system, wherein the auxiliary electrical load may ramp up faster than the electrolyzer, wherein the auxiliary electrical load may immediately absorb the alternating current electrical power input and/or the direct current electrical power input. For this, the auxiliary electrical load may be a resistor or an energy storage device, like a battery. The auxiliary electrical load may compensate a difference between the respective ramp up rates of the electrical load and the electrolyzer or any other power generation unit. This provides the advantage that an immediate shutdown of the electrolysis system can be compensated, and a continuous power ramp can be provided. The auxiliary electrical load may also comprise the same features as said electrical load above.

In one embodiment, the method further comprises the steps of:
- Detecting a deviation of a network parameter of the electrical network from a reference network parameter of the electrical network, particularly outside a tolerance band from the reference network parameter; and/or
- Ramping up the electrolyzer when the deviation of the network parameter is within the tolerance band; or
- Adjusting the power consumption of the electrical load and/or of the auxiliary electrical load corresponding to the deviation of the network parameter from the reference network parameter when the deviation of the network parameter is within the tolerance band.

In other words, a fault event of the electrical network is detected, particularly when the network parameter is outside the stability range. The stability range may be an interval around a reference network parameter, wherein the electrolyzer may produce the energy carrier. The network parameter may be a network voltage and/or a network frequency and the reference network parameter may be a reference network voltage and/or a reference network frequency.

Additionally or alternatively, a violation of an operating range by an operating parameter of the electrolyzer may be detected. This may comprise the electrolyzer entering into an operating mode where an electrolysis process of the electrolyzer may stop, when the network parameter is outside the stability range. For example, a shutdown of the electrolyzer may be detected, particularly due to the deviation of the network parameter from the reference network parameter and/or the resulting impact on the electrolysis process side, like foreign gas concentration or pressure.

Additionally or alternatively, when the network parameter enters the tolerance range again, the electrolyzer may be started up again with its operational ramp-rate, or a ramp-rate specifically chosen for such events, which is still lower than the ramp-rate required by the grid operator, wherein the electrical load and/or the auxiliary electrical load and the electrolyzer absorb the alternating current electrical power input and/or the direct current electrical power input and wherein the electrical load and/or the auxiliary electrical load decrease their respective absorption of the alternating current electrical power input and/or of the direct current electrical power input corresponding to the ramp-up rate of the electrolyzer during the ramp-up of the electrolyzer. This provides the advantage that lifetime reducing operating points of the electrolyzer can be avoided. Further, the additional load can enable the electrolyzer to ramp up slower than the operational ramp-up rate of the electrolyzer, particularly under normal load conditions.

The method may also include the features of the corresponding electrolysis system and any combination of the corresponding embodiments thereof, particularly with the necessary modifications. Therefore, for the sake of brevity, the embodiments of the electrolysis system are not repeated for said method.

The invention further relates to a computer program comprising instructions which, when the program is executed by a controller, particularly by an electrolysis system controller and/or an electrolyzer power supply system controller and/or a converter controller and/or an electrical load controller, cause the controller to carry out the steps of said method. Alternatively, the controller may also be a personal computer. The electrical load controller may also be a controller of the auxiliary electrical load.

The controller may comprise means to execute said method, particularly means to control the electrolyzer power supply system, particularly to control the transformer and/or an on-load tap changer and/or the converter, and/or means to control the electrical load and/or a switching element for connecting and disconnecting the electrical load from the electrolyzer power supply system and/or means to control a load converter of the electrical load.

Additionally or alternatively, the controller may comprise means for adjusting the absorption of the alternating current electrical power input and/or the direct current electrical power input by the electrical load.

Additionally or alternatively, the converter may comprise means to drop and/or boost the direct current electrical power input corresponding to a deviation of the network parameter from a reference network parameter of an electrical network and/or to drop or boost the alternating current electrical power input and/or the direct current electrical power input being absorbed by the electrical load. The controller may further comprise means to activate and/or deactivate a switch, particularly a thyristor or a transistor, of the converter and/or of the load converter.

Additionally or alternatively, the controller may comprise means to control an operating point of the electrolyzer and/or of the electrical load and/or of the auxiliary electrical load. Additionally or alternatively, the controller may comprise means to redirect the alternating current electrical power input and/or the direct current electrical power input between the electrolyzer and the electrical load and/or the auxiliary electrical load or vice versa.

The invention also relates to a computer-readable storage medium having stored thereon said computer program. In other words, the computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the In-ternet for example.

The invention further relates to a controller, particularly an electrolysis system controller and/or an electrolyzer power supply system controller and/or a converter controller and/or an electrical load controller, comprising said computer-readable storage medium having stored thereon said computer program. The controller may be programmable logic controller (PLC). The controller may comprise at least one processor and said computer-readable storage medium, wherein the computer-readable storage medium comprises said computer program which, when executed by the at least one processor, cause the controller to perform the method as described above. In other words, the at least one processor may be a microprocessor and/or a microcontroller and/or a FPGA (Field Programmable Gate Array) and/or a DSP (Digital Signal Processor) .

Alternatively, the controller may be a personal computer. The electrical load controller may also be a controller of the auxiliary electrical load.

The controller may comprise means to execute said method, particularly means to control the electrolyzer power supply system, particularly to control the transformer and/or an on-load tap changer and/or the converter, and/or means to control the electrical load and/or a switching element for connecting and disconnecting the electrical load from the electrolyzer power supply system and/or means to control a load converter of the electrical load.

Additionally or alternatively, the controller may comprise means for adjusting the absorption of the alternating current electrical power input and/or the direct current electrical power input by the electrical load.

Additionally or alternatively, the converter may comprise means to drop and/or boost the direct current electrical power input corresponding to a deviation of the network parameter from a reference network parameter of an electrical network and/or to drop or boost the alternating current electrical power input and/or the direct current electrical power input being absorbed by the electrical load. The controller may further comprise means to activate and/or deactivate a switch, particularly a thyristor or a transistor, of the converter and/or of the load converter.

Additionally or alternatively, the controller may comprise means to control an operating point of the electrolyzer and/or of the electrical load and/or of the auxiliary electrical load. Additionally or alternatively, the controller may comprise means to redirect the alternating current electrical power input and/or the direct current electrical power input between the electrolyzer and the electrical load and/or the auxiliary electrical load or vice versa.

The invention further relates to an electrical power system comprising said electrolysis system and/or said controller. The electrical power system may be a network of electrical components deployed to supply, transfer, and use electric power. The electrical power system may comprise an electrical power source and an electrical load that are connected via an electrical network, wherein particularly the electrical power source and/or the electrical load may comprise the electrolysis system from above. In other words, the electrical power system may comprise an entirety of all technical equipment required for generation, transmission and distribution of electrical energy within a control zone of a distribution area where electrical energy is provided from a producer to a consumer. For example, the electrical power system may comprise a switchyard, which optionally may comprise said controller, wherein the controller particularly may be a switchyard controller.

The invention also relates to realizations comprising a combination of the features of several of the described embodiments.

### Brief description of the drawings

The present disclosure will be more readily appreciated by reference to the following detailed description when being considered in connection with the accompanying drawings in which:
- Figure 1: shows a schematic view of an electrolysis system comprising an electrolyzer power supply system and the electrical load;
- Figure 2: schematically shows a current-voltage characteristic of an electrolyzer at the beginning of life compared to a current-voltage characteristic of the electrolyzer at the end of life;
- Figure 3: schematically shows a sequence of a fault event wherein the electrical load receiving the electrical power input with or instead of the electrolyzer contributes to the stability of the electrical network; and
- Figure 4: shows a schematic flow diagram of the method for operating an electrolysis system, particularly for riding through a fault event.

In the following, the invention will be explained in more detail with reference to the accompanying figure. In the Figures, like elements are denoted by identical reference numerals and repeated description thereof may be omitted in order to avoid redundancies.

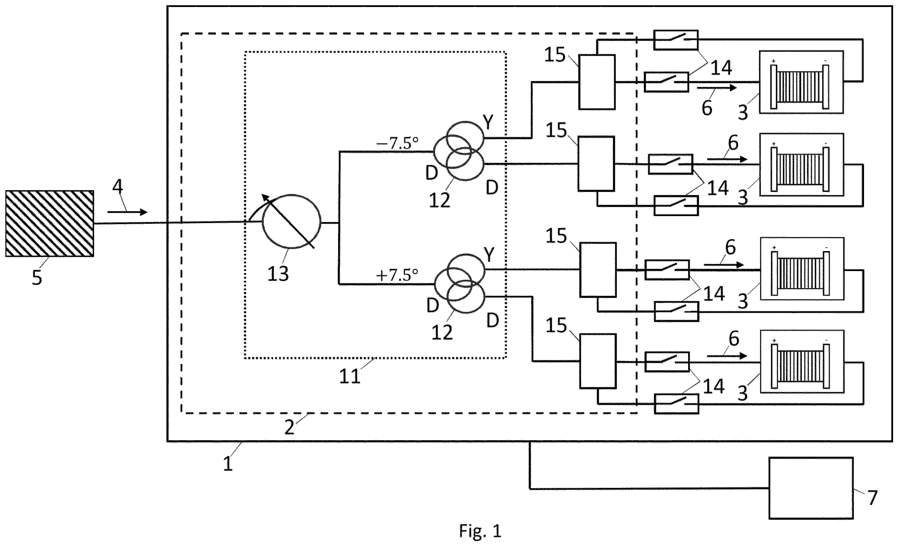

Figure 1 schematically shows an example electrolysis system 1 in a 24-pulse operation. The schematic electrolysis system 1 comprises an electrolyzer power supply system 2 and one or more electrolyzers 3. The electrolyzer power supply system 2 is adapted to receive an alternating current electrical power input 4 from the electrical grid 5 and to convert the alternating current electrical power input 4 into a direct current electrical power input 6 for the electrolyzer 3. For this, the electrolyzer power supply system 2 comprises a transformer unit 11 and a converter 15, wherein the transformer unit 11 comprises one or more transformers 12 and optionally an on-load tap changer 13. The electrolyzer power supply system 2 is electrically connected to the electrical network 5 via the transformer unit 11 for converting the alternating current electrical power input 4 received from the electrical network 5 into an alternating current electrical power input 4 for the converter 15. The transformers 12 of the transformer unit 11 may optionally be adapted to provide a phase shift between at least two three-winding transformers 12, particularly with a phase shift of 15°, hence +7.5° and - 7.5°. The transformer 12 respectively is adapted to receive an alternating current electrical power input 4 from the electrical network 5 and to convert and to provide the alternating current electrical power input 4 to the respective converter 15.

The converter 15 is adapted to convert the alternating current electrical power input 4 into a direct current electrical power input 6 for the electrolyzer 3. Optionally, the converter may be adapted to drop and/or boost a direct voltage of the direct current electrical power input 6. The electrical power supply system 2, particularly the converter 15, is electrically connected to the electrolyzer 3 via a switching element 14 for connecting and/or disconnecting the electrolyzer 3.

The electrolyzer 3 is adapted to convert the direct current electrical power input 8 into an energy carrier, such as hydrogen. Auxiliary systems for providing an electrolysis ingredient, such as water, or for providing cooling and/or a compression and/or storage of the energy carrier, particularly energy carrier gases, are not shown.

The electrical network 5 may electrically connect a plurality of electrical power sources with a plurality of electrical loads in a network operation mode. Alternatively, the electrical network 5 may also be a line that electrically connects the electrical power source with the electrolyzer power supply system 2 in an island operation mode.

The electrolysis system 1 further comprises an electrical load 7, which is electrically connected to the electrolyzer power supply system 2 or disconnected from the electrolyzer power supply system 2, particularly to the transformer unit 11 and/or the transformer 12 and/or the on-load tap changer 13 and/or the converter 15 and/or a current bus of the electrolyzer power supply system 2.

The electrical load 7 is adapted to absorb the alternating current electrical power input 4 and/or the direct current electrical power input 6 at least partly and is further adapted to receive the alternating current electrical power input 4 and/or the direct current electrical power input 6 together with or instead of the electrolyzer 7. The electrical load 7 may be any kind of storage unit for storing or converting electrical energy. For example, the electrical load 7 may be a resistor which is cooled by means of a cooling liquid.

The electrical load 7 is electrically connected to the electrolyzer power supply system 2, particularly to the transformer 12 and/or the converter 15. The electrolyzer power supply system 2, particularly the converter 15, may consist of or comprise an insulated gate bipolar transistor based system (IGBT based system). The electrical load may be connected by means of a switching element 14 which is adapted to connect and/or disconnect the electrical load 7 by means of a load converter. Alternatively, the converter 15 may be adapted to redirect the direct current electrical power input between the electrolyzer 3 and the electrical load 7, particularly to adjust the absorption of the alternating current electrical power input 4 and/or the direct current electrical power input 6 by the electrical load 7 and/or by the electrolyzer 3 in a range between zero and the alternating current electrical power input 4 and/or the direct current electrical power input 6.

The switching element 14 may be adapted to electrically connect or disconnect the electrical load from the electrolyzer power supply system 2. Alternatively, the switching element 14 may be adapted to switch between the electrical load 7 and the electrolyzer 3.

Additionally or alternatively, the electrical load 7 is electrically connected to the electrolyzer power supply system 2 by means of a load converter (not shown!) which is adapted to adjust the absorption of the alternating current electrical power input 4 and/or the direct current electrical power input 6 by the electrical load 7 in a range between zero and the alternating current electrical power input 4 and/or the direct current electrical power input 6. Here, the electrical load 7 may absorb the alternating current electrical power input 4 and/or the direct current electrical power input 6 instead of the electrolyzer 3.

Additionally or alternatively, the electrolyzer power supply system 2 is adapted to distribute the alternating current electrical power input 4 and/or the direct current electrical power input 6 between the electrolyzer 3 and the electrical load 7. Distributing comprises dividing the alternating current electrical power input 4 and/or the direct current electrical power input 6 between the electrolyzer 3 and the electrical load 7, particularly in a ratio from zero to the alternating current electrical power input 4 and/or the direct current electrical power input 6 respectively for the electrolyzer 3 and for the electrical load 7, particularly corresponding to a deviation of the network parameter 8 of the electrical network 5 from a reference network parameter 9. The network parameter 8 may be a voltage and/or a frequency of the electrical network 5 and the reference network parameter 9 may a reference voltage and/or a reference frequency of the electrical network 5.

The electrical load 7 is adapted to increase the absorption of the alternating current electrical power input and/or of the direct current electrical power input 6 faster than a ramp-up rate of the electrolyzer. This allows to replace the electrolyzer 3 when the electrolyzer 3 is not able to function as an electrical load, for example due to an undervoltage or overvoltage fault event in the electrical network 5. Furthermore, this allows the electrolysis system 1 to continue functioning as an electrical load when the electrolyzer 3 is not able to due to the network parameter 8 being outside an operating threshold corresponding to a current-voltage characteristic of the electrolyzer. For this, the electrical load 7 has a different current-voltage characteristic than the electrolyzer 3 and different operational limits.

Additionally or alternatively, the electrical load 7 is adapted to reduce the absorption of the alternating current electrical power input and/or of the direct current electrical power input 6 corresponding to the ramp-up rate of the electrolyzer 3. For example, the electrical load 7 is adapted to reduce the absorption of the alternating current electrical power input 4 and/or of the direct current electrical power input 6 slower or equal to the ramp-up rate of the electrolyzer 3. This allows the electrolysis system 1 to continue functioning as an electrical load when the electrolyzer 3 is not able to or when the electrolyzer 3 ramps up. Thus, an unwanted shutdown of the electrolyzer 3 during the ramp-up can be avoided.

Additionally or alternatively, the electrolysis system 1 may comprise a plurality of electrical loads 7, wherein the respective electrical load 7 is adapted to absorb the alternating current electrical power input 4 and/or the direct current electrical power input 6 of the electrolyzer 3 at least partly. The electrolyzer power supply system 2 is adapted to adjust the power intake and/or a number of electrical loads 7 which are connected to or disconnected from the electrolyzer power supply system 2, particularly corresponding to the ramp-up rate of the electrolyzer 3. The electrolyzer power supply system 2 is adapted to increase the power consumption and/or number of electrical loads 7, particularly to adjust and/or connect at least one of the electrical loads 7 immediately to the electrolyzer power supply system 2 when the electrolyzer 3 shuts down or is disconnected from the electrolyzer power supply system 2.

Additionally or alternatively, the electrolyzer power supply system 2 is adapted to increase the power intake and/or number of electrical loads 7 corresponding to the deviation of the network parameter 8 from a reference network parameter 9.

Additionally or alternatively, the electrolyzer power supply system 2 is adapted to decrease the power intake and/or number of electrical loads 7 during a ramp-up of the electrolyzer 3, wherein a rate of change of a total electrical load 7 corresponds to the ramp-up rate of the electrolyzer 3. The rate of change of the total electrical load 7 may particularly be smaller than or equal to the ramp-up rate of the electrolyzer 3. The absorption of the alternating current electrical power input 4 and/or of the direct current electrical power input 6 of the respective electrical load 7 corresponds to the rate of change of the total electrical load 7.

Additionally or alternatively, the electrolysis system 1 comprises an auxiliary electrical load (not shown!) which is electrically connected to the electrolyzer power supply system 2 and which is adapted to ramp up faster than the electrolyzer 3. For instance, the auxiliary electrical load may be an energy storage unit, like a battery, or an electrical resistance.

An exemplary way to provide this functionality is to apply a power resistor for the electrical load 7 with sufficient cooling, which can be connected using a semiconductor device for the converter 15 such as a thyristor, IGBT or (SiC-) Mosfet, or a fast mechanical switch 14 (operation must meet the time constraints mentioned above). Cooling can be provided by convective or forced air cooling, as well as natural or forced water or oil cooling. To ensure that the power of the electrical load 7 is matched to the power consumption before the fault, and to allow the power of the electrical load 7 to be reduced in a way that matches the subsequent power ramp-up of the electrolyzer 3.
(1) By using a controllable line-commutated semiconductor device for the converter 15, such as a thyristor, the power consumption can be controlled by adjusting the firing angle. When voltage source converters are used, pulse width modulation can perform the same function. In this case, the number of electrical loads 7 can be kept smaller because each electrical load 7 can be controlled individually. This approach is applicable to any controllable electrical load 7 (e.g. pumps, fans, etc.).
(2) By applying a mechanical switching element 14 to a non-controllable or insufficiently controllable electrical load 7, a power adjustment can be achieved by adjusting the number of additional electrical loads 7 that are connected or disconnected. By having a sufficient number to keep the discrete power steps small (preferably ≤5% steps of the alternating current electrical power input and/or of the direct current electrical power input, ≤10% is acceptable, ≤20% or more is workable, possibly with additional devices). The switching elements 14 may be able to close and open quickly enough to match the power ramping of the electrolysis system.

Hence, the electrical load 7 and/or the auxiliary electrical load allows the electrolysis system 1 to continue functioning as an electrical load of an electrical network 5, when the network voltage and/or frequency is outside an operating range of the electrolyzer 3 during a fault event. Additionally, the auxiliary electrical load may be switched on when the electrolysis system 1 trips due to an electrolysis-internal reason for balancing the electrical power in the electrical network. This may be especially advantageous when the electrical grid is an islanded grid, with at least one power generation unit and one load.

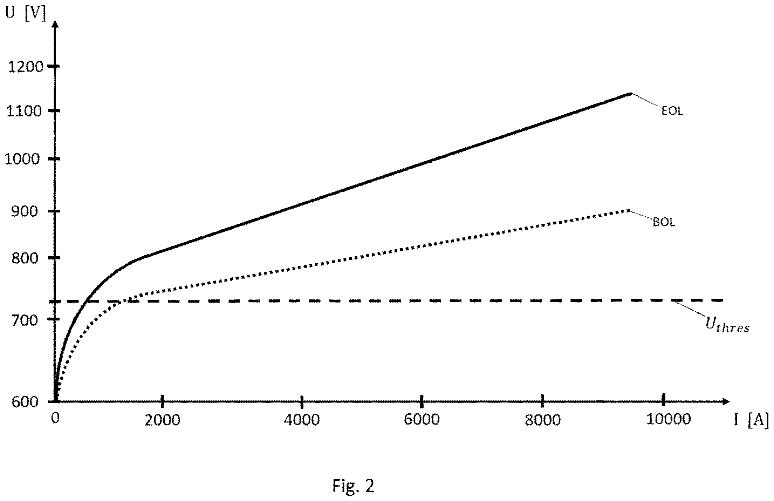

Figure 2 shows a schematic example of a current-voltage characteristic of the electrolyzer 3 at the begin of life BOL and at the end of life EOL.

If the electrolysis system 1 is initially operating at 60% part load (6000 A, 900 V DC), reducing the input voltage by 100 V will reduce the direct current by 4,200 A and the power consumption by approximately 75% at the begin of life BOL. If the voltage drops by about 180 V in the example, gas production stops because the electrolysis system voltage is in the Nernst range. By definition, the fault event is cleared when the voltage returns to the defined voltage band, which could be in the range of 110% to 90% or 85% of a reference voltage. If the network voltage only recovers to the lower threshold of the voltage band (85%), the input voltage at the converter or rectifier input may be too low to enable pre-fault power consumption of the electrolyzer 3, since the possible power consumption is determined by said current-voltage characteristic. This effect may waken over the life of the electrolyzer 3, particularly at the end of life EOL.

Since the electrolysis system 1 is highly dependent on the input voltage, already a slight voltage reduction changes the input power strongly. If the voltage drops below the Nernst voltage (about 1.23 V per cell for water electrolysis), the gas production and thus the electrolysis process stops completely. For example, the nominal voltage at the begin of life BOL is about 980 V, while the threshold voltage *Uₜₕᵣₑₛ* for hydrogen production is in the range of 720 V. When the input voltage quickly drops to 73% of the reference voltage, no electrical power from the electrical network 5 can be consumed anymore by the electrolysis system 1.

This leads to a massive imbalance between production and consumption when several Gigawatt of electrolysis capacity are affected at the same time, while the production units continue to operate at only slightly reduced power compared to the pre-fault values. In a worst-case scenario, the operator of the electrical network 5 would not be able to stabilize the electrical network 5, which may result in a brown-out or a black-out of large regions.

Furthermore, a strong increase from no power intake during the outage to current power intake immediately after a fault clearance causes stress to the electrochemical membranes of the electrolyzer 3 and the process system thereof. This may happen when the network parameter may be outside the stability range from the reference network parameter of the electrical network. This might result in an increased degradation of the electrolyzer 3 or cause other, possibly safety critical, issues such as unwanted and unsafe mixtures of hydrogen and oxygen within the electrolyzer 3 and/or the process system thereof.

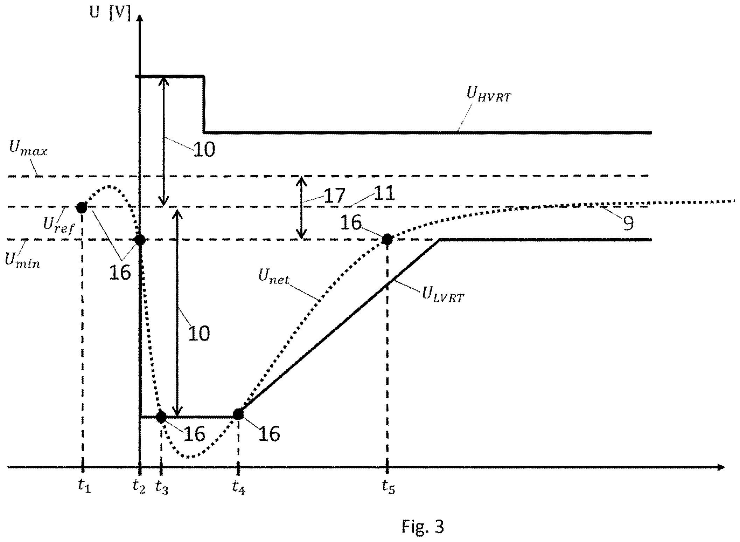

Figure 3 shows a schematic fault event of the electrical network 5, particularly an overvoltage event corresponding to a high voltage fault ride through event HVRT and/or an undervoltage event corresponding to a low voltage fault ride through event LVRT. The network parameter 8 is the network voltage *Uₙₑₜ,* but may additionally or alternatively be a network frequency. The network voltage *Uₙₑₜ* fluctuates around the reference voltage *U_{ref}* of the electrical network 7 within the stability range 10 from the point of time *t*₁ until it leaves the stability range 10 at *t*₂, wherein *t*₂ may correspond to the point of time 0 in Figure 3.

A fault event may be defined to commence when the network parameter 8 leaves the tolerance band 17 around the reference network parameter 9 at *t*₂, whereas the fault event may be defined to end when the network parameter enters the tolerance band at *t*₅. A lower limit of the tolerance band 17 may be denoted by *Uₘᵢₙ* and an upper limit may be denoted by *Uₘₐₓ.*

The electrolyzer 3 may still remain in an operating range during the fault event between *t*₂ and *t*₅ when the network parameter is outside the tolerance band 17 and within the stability range 10. The stability range 10 is limited by the high voltage fault ride through voltage *U_{HVRT}* and the low voltage fault ride through voltage *U_{LVRT},* wherein the electrolyzer 3 may be in an operating range when the network voltage *Uₙₑₜ* is inside the stability range 10 from the reference voltage *U_{ref}* which particularly is limited by *U_{HVRT}* and/or *U_{LVRT}.* Thus, as long as the network parameter 8 remains inside the stability range 10 from the reference network parameter 9, the operating point 16 of the electrolyzer 3 remains within an operating range of the electrolyzer 3, where the electrolyzer 3 functions as an electrical load of the electrical network 5, whereas when the network parameter 8 leaves the stability range 10, in the overvoltage event *U_{HVRT}* and/or the undervoltage event *U_{LVRT},* the electrolyzer 3 may stop functioning as an electrical load for the electrical network 5 due to the operating point 16 being outside an operating range of the electrolyzer 3.

Thus, the electrolyzer 3 may shut down or reduce its power consumption to almost 0 between *t*₃ and *t*₅, wherein the electrical load 7 replaces the electrolyzer 3 as an electrical load between *t*₂ and *t*₅. Here, the electrical load 7 and/or the additional electrical load absorbs the alternating current electrical power input 4 and/or the direct current electrical power input 6 instead of the electrolyzer 3.

The electrical load thus ensures power consumption during the fault event, since the electrolysis system 1 may stop a power intake if the voltage *Uₙₑₜ* leaves the stability range 10 and/or the tolerance band 17.

Thus, the electrical load 7 may replace the electrolysis as an electrical load when the network parameter 9 leaves the stability range 10 at *t*₃ and replace it at least until *t*₅.

Additionally or alternatively, the electrical load 7 and/or the additional electrical load may provide a pre-fault power consumption with a time range after the network voltage *Uₙₑₜ* has returned into the tolerance band 17 at *t*₅. The time range may be 1 second, for instance.

Additionally, the electrical load may be operated longer than a fault duration, i.e. longer than the duration between *t*₂ and *t*₅, particularly until the electrolyzer 3 has ramped up, particularly to a pre-fault operating point 16. Thus, the duration may be the fault duration and a ramp-up duration of the electrolyzer 3.

Additionally or alternatively, the electrical load 7 may absorb the alternating current electrical power input 4 and/or the direct current electrical power input 6 in parallel with the electrolyzer 3, when the network parameter 8 remains inside the stability range 10 and/or the tolerance band 17, particularly before *t*₂ and after *t*₅ and/or before *t*₃ and after *t*₄.

When the network parameter 8 has returned into the tolerance band 17 at *t*₅, the electrolyzer 3 is ramped up again after the shutdown. After the network parameter returned to its tolerance band 17, the electrical load 7 and the electrolyzer 3 together absorb the alternating current electrical power input 4 and/or the direct current electrical power input 6, wherein the electrical load 7 reduces the absorption of the alternating current electrical power input 4 and/or the direct current electrical power input 6 corresponding to the ramp-up rate of the electrolyzer 3, particularly at a rate which is smaller than or equal to the ramp-up rate of the electrolyzer 3. This avoids an unwanted shutdown of the electrolyzer 3 during the ramp up.

At *t*₅, exemplarily, the network voltage *Uₙₑₜ* may return to the reference voltage *U_{ref}I* and/or may remain inside the tolerance band 17 around the reference voltage *U_{ref},* wherein the electrolyzer 3 has entirely ramped up to the operating point of *t*₁ or *t*₂ before the fault event. Here, the electrical load 7 is disconnected from the electrolyzer power supply system 2 or put into a stand-by mode to allow for fast re-start, such that the electrolyzer 3 receives the entire or the majority (>95% to >99.5%)of direct current electrical power input 6.

Additionally or alternatively, the electrical load 7 may already consume electric power during the entire fault event, from the moment when the network parameter leaves 8 the tolerance band 8 until it returns to this band. During the event the electrical load 7 may be controlled to consume a constant electric direct or alternating current.

Additionally, the electrical load 7 may absorb the alternating current electrical power input 4 and/or the direct current electrical power input 6 in parallel with the electrolyzer 3, when the network parameter 8 remains inside the tolerance range 8 around the reference network parameter 9. With the electrical load 7 having a ramp-up rate that is faster than the ramp-up rate of the electrolyzer 3, the electrical load 7 may damp an oscillation of the network parameter 8 around the reference network parameter 9. Thus, the electrical load 7 can contribute to the stability of the electrical network 5 when the network parameter 8 remains inside the stability range 10, particularly due to its ramp up or ramp down rate that is faster ramp up rate or the ramp down rate of the electrolyzer 3.

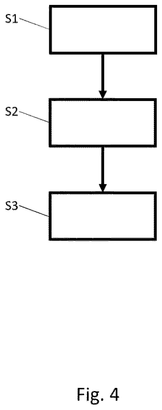

Figure 4 shows a schematic flow diagram of the method for operating the electrolysis system 1. In an optional first step S1, a deviation of a network parameter 8 of the electrical network 5 from a reference network parameter 9 of the electrical network 5 is detected, particularly the network parameter 8 being outside a stability range 10 from the reference network parameter 9.

Additionally or alternatively, a shutdown of the electrolyzer 3 due to said deviation of the network parameter 8 from the reference network parameter 9, particularly due to an undervoltage or overvoltage, is detected or triggered.

In a second step S2, the alternating current electrical power input 4 and/or the direct current electrical power input 6 is absorbed by electrical load 7 at least partly, particularly at a pre-fault level of the electrolyzer when the network parameter 8 has left the tolerance band 17 and returned to it.

Additionally or alternatively, the alternating current electrical power input 4 and/or the direct current electrical power input 6 is absorbed by electrical load 7 at least partly, particularly at a constant pre-fault related alternating or direct current consumption during the fault event which is ended by a network parameter of the electrical power input 4 returning to the tolerance band 17.

Additionally, the alternating current electrical power input 4 and/or the direct current electrical power input 6 is distributed between the electrical load 7 and the electrolyzer 3, particularly corresponding to the deviation of the network parameter 8 from the reference network parameter 9 when the network parameter is inside the tolerance band 17 and/or stability range 10.

Thus, the electrolysis system 1 provides the ability to provide additional service functions for stabilizing the electrical network 5 without interfering with the electrochemical process of the electrolyzer 3, such as:
a) Active frequency support, by increasing the power input in case of over-frequency events (which might be critical for the electrolysis system 1 due to the high dynamics required in the power increase and the resulting gas production). The electrolysis system 1 comprising the electrical load 7 also offers the possibility of providing this functionality even when the electrolyzer 3 is already at full load (sufficient sizing of the upstream power supply must be ensured).
b) Power oscillation damping (POD), by dynamically changing the power consumption of the electrical load 7 to actively damp power oscillations in the electrical network 5.

Additionally or alternatively, the alternating current electrical power input 4 and/or the direct current electrical power input 6 is absorbed by the electrical load 7 at least partly instead of the electrolyzer, particularly when the network parameter is outside the tolerance band 17, wherein the absorption of the alternating current electrical power input 4 and/or of the direct current electrical power input 6 is increased faster than the ramp-up rate of the electrolyzer 3, particularly immediately. This may be achieved by using a resistor for the electrical load 7.

Alternatively, total power consumption and/or a number of electrical loads 7 which are connected to or disconnected from the electrolyzer power supply system 2 are adjusted, particularly increased or decreased corresponding to the deviation of the network parameter 8 from the reference network parameter 9, optionally when the network parameter is inside the stability range 10. The electrical load 7 may be disconnected from the electrolyzer power supply system 1 when the electrolyzer 3 has ramped up, or reduce its power consumption, for example to less than 5%, preferably less than 0,05% of the electrolysis total power consumption.

Additionally, an auxiliary electrical load is connected to the electrolyzer power supply system 2, wherein the auxiliary electrical load ramps up faster than the electrolyzer 3, particularly when the deviation of the network parameter 8 from the reference network parameter 9 is leaving the tolerance band 17 . The auxiliary electrical load allows to compensate a difference between the respective ramp up rates of the electrical load 7 and the electrolyzer 3 or any other unit of the electrolysis system 1.

In an optional third step S3, the electrolyzer 3 is ramped up when the deviation of the network parameter 8 is within the tolerance band 17 and after the electrolyzer 3 has shut down. Thus, the network voltage *Uₙₑₜ* corresponds to the minimum voltage for the electrolyzer 3 to start operating, preferable the tolerance band 17. During the ramp-up of the electrolyzer 3, the absorption of the alternating current electrical power input 4 and/or of the direct current electrical power input 6 is reduced by the electrical load 7 corresponding to the ramp-up rate of the electrolyzer 3, particularly at a rate which is slower than or equal to the ramp-up rate of the electrolyzer 3.

Alternatively, the power consumption and/or number of electrical loads 7 which are connected to or disconnected from the electrolyzer power supply system 2 is decreased, wherein a rate of decrease of the total electrical load 7 particularly corresponds to the ramp-up rate of the electrolyzer 3. Particularly, the rate of decrease is smaller than or equal to the ramp-up rate of the electrolyzer 3. The electrical load 7 may be disconnected from the electrolyzer power supply system 1 when the electrolyzer 3 has ramped up or reduce its power consumption, for example to less than 5%, preferably less than 0,05% of the electrolysis total power consumption. Additionally, the absorption of the alternating current electrical power input 4 and/or of the direct current electrical power input 6 is reduced by the electrical load 7 at the ramp-up rate of the electrolyzer 3 with a safety margin, preferably +/- 5% or less from the ramp-up rate of the electrolyzer 3. This approach results in a constant active current consumption by the electrolysis system 1 during and after the fault, while allowing the electrolyzer 3 to ramp up slowly and avoiding a potentially life reducing high dynamic operation of the electrolyzer 3.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Electrolysis system (1) comprising an electrolyzer power supply system (2) and an electrolyzer (3), wherein the electrolyzer power supply system (2) is adapted to receive an alternating current electrical power input (4) from an electrical network (5) and to convert the alternating current electrical power input (4) into a direct current electrical power input (5) for the electrolyzer (3), wherein the electrolyzer power supply system (2) is adapted to provide the direct current electrical power input (6) to the electrolyzer (3), which is adapted to produce an energy carrier by means of the direct current electrical power input (6),
**characterized in that**
further comprising an electrical load (7) which is adapted to absorb the alternating current electrical power input (4) and/or the direct current electrical power input(6) at least partly, particularly instead of the electrolyzer (3) and/or for at least a duration of a fault event.

2. Electrolysis system (1) according to claim 1, **characterized in that** the electrolyzer power supply system (2) is adapted to distribute the alternating current electrical power input (4) and/or the direct current electrical power input (6) between the electrolyzer (3) and the electrical load (7).

3. Electrolysis system (1) according to one of the preceding claims, **characterized in that** the electrical load (7) is adapted to increase the absorption of the alternating current electrical power input (4) and/or of the direct current electrical power input (6) faster than a ramp-up rate of the electrolyzer (3) and/or to decrease the absorption of the alternating current electrical power input (4) and/or of the direct current electrical power input (6) corresponding to the ramp-up rate of the electrolyzer (3) or faster than a ramp-down rate of the electrolyzer (3).

4. Electrolysis system (1) according to one of the preceding claims, **characterized in that** further comprising a plurality of electrical loads (7), wherein the electrolyzer power supply system (2) is adapted to adjust a power input and/or a number of electrical loads (7) which are connected to or disconnected from the electrolyzer power supply system (2), particularly corresponding to the ramp-up rate of the electrolyzer (3).

5. Electrolysis system (1) according to one of the preceding claims, **characterized in that** further comprising an auxiliary electrical load which is electrically connected to the electrolyzer power supply system (2) and adapted to ramp up faster than the electrolyzer (3).

6. Electrolysis system (1) according to one of the preceding claims, **characterized in that** the electrical load (7) is adapted to absorb the alternating current electrical power input (4) and/or the direct current electrical power input (6) for at least a duration of the fault event, particularly at a constant power and/or current absorption rate.

7. Electrolysis system (1) according to one of the preceding claims, wherein the electrical load (7) is adapted to consume the alternating current electrical power input (4) and/or the direct current electrical power input(6) for at least the duration of the fault event and/or wherein the electrical load (7) is adapted to consume a constant electric direct or alternating current, particularly during the fault event.

8. Method for operating an electrolysis system (1) comprising an electrolyzer power supply system (2) and an electrolyzer (3), wherein the electrolyzer power supply system (2) receives an alternating current electrical power input (4) from an electrical network (5) and converts the alternating current electrical power input (4) into a direct current electrical power input (6) for the electrolyzer (3), wherein the electrolyzer power supply system (2) provides the direct current electrical power input (6) to the electrolyzer (3), which produces an energy carrier by means of the direct current electrical power input (6), further comprising an electrical load (7) which is electrically connected to the electrolyzer power supply system (2), comprising the step of:
- Absorbing the alternating current electrical power input (4) and/or the direct current electrical power input (6) by electrical load (7) at least partly, particularly instead of the electrolyzer (3) and/or for at least a duration of a fault event.

9. Method according to claim 8, further comprising the step of:
- Distributing the alternating current electrical power input (4) and/or the direct current electrical power input (6) between the electrical load (7) and the electrolyzer (3).

10. Method according to claim 8 or 9, further comprising the steps of:
- Increasing the absorption of the alternating current electrical power input (4) and/or of the direct current electrical power input (6) by the electrical load (7) faster than a ramp-up rate of the electrolyzer (3); and/or
- Decreasing the absorption of the alternating current electrical power input (4) and/or of the direct current electrical power input (6) by the electrical load (7) corresponding to the ramp-up rate of the electrolyzer (3) or faster than a ramp-down rate of the electrolyzer (3).

11. Method according to one of the claims claim 8 to 10, further comprising the step of:
- Adjusting a power consumption and/or a number of electrical loads (7) which are connected to or disconnected from the electrolyzer power supply system (2), particularly corresponding to the ramp-up rate of the electrolyzer (3).

12. Method according to one of the claims 8 to 11, further comprising the step of:
- Adjusting a power consumption and/or connecting an auxiliary electrical load to the electrolyzer power supply system (2), or ramping the auxiliary electrical load up, wherein the auxiliary electrical load ramps up faster than the electrolyzer (3).

13. Method according to one of the claims 8 to 12, further comprising the step of:
- Detecting a deviation of a network parameter (8) of the electrical network (5) from a reference network parameter (9) of the electrical network (5), particularly outside a tolerance band (17) from the reference network parameter (9); and/or
- Ramping up the electrolyzer (3) when the deviation of the network parameter (8) is within the tolerance band (17); or
- Adjusting the power consumption of the electrical load (7) and/or of the auxiliary electrical load corresponding to the deviation of the network parameter (8) from the reference network parameter (9) when the deviation of the network parameter (8) is within the tolerance band (17).

14. Computer program comprising instructions which, when the program is executed by a controller, particularly by an electrolysis system controller and/or an electrolyzer power supply system controller and/or a converter controller and/or an electrical load controller, cause the controller to carry out the steps of the method of one of the claims 8 to 13.

15. Computer-readable storage medium having stored thereon the computer program of claim 14.

16. Controller, particularly an electrolysis system controller and/or an electrolyzer power supply system controller and/or a converter controller and/or an electrical load controller, comprising a computer-readable storage medium having stored thereon the computer program of claim 14 and optionally means to execute the method of one of the claims 8 to 13.

17. Electrical power system comprising the electrolysis system (1) of one of the claims 1 to 7 and/or the controller of claim 16.
